# EUROPÄISCHE PATENTANMELDUNG

(11) **EP 4 427 985 A1**
(43) Veröffentlichungstag der Anmeldung: **11.09.2024**
(21) Anmeldenummer: 24152139.2
(22) Anmeldetag: 16.01.2024
(51) Int. Cl.: B60R 16/02

(54) **VORRICHTUNG ZUM DURCHFÜHREN VON KABELN**

(30) Priorität: 09.03.2023 DE 102023105892
(71) Anmelder: CLAAS Tractor S.A.S., 78141 Vélizy-Villacoublay Cedex (FR)
(72) Erfinder: Cossin, Aurélien, 92140 Clamart (FR); Gicquel, Guénolè, 78690 Les Essarts-le-Roi (FR); Landrou, Jeróme, 28210 Senantes (FR); Durepaire, Mathias, 72000 Le Mans (FR)
(74) Vertreter: CLAAS Gruppe

(57) **Zusammenfassung**

Die vorliegende Erfindung betrifft eine Vorrichtung (18) zum Durchführen von Kabeln durch eine Ausnehmung (17) in einer Struktur einer Kabine (5), insbesondere einem Kabinenboden, einer landwirtschaftlichen Arbeitsmaschine (1), insbesondere eines Traktors (2), wobei die Vorrichtung (18) an der Struktur der Kabine (5) im Bereich der Ausnehmung (17) anordenbar ist. Die Vorrichtung (18) ist dadurch gekennzeichnet, dass die Vorrichtung (18) ein Rahmenelement (19) mit einer Öffnung (20) umfasst, das an der Struktur der Kabine (5) lösbar befestigbar ist und zwar derart, dass die Öffnung (20) des Rahmenelements (19) mit der Ausnehmung (20) in der Struktur der Kabine (5) fluchtet, wobei die Vorrichtung (18) ein Verschlusselement (21) umfasst, welches lösbar an dem Rahmenelement (19) befestigt ist, wobei mittels des Verschlusselements (21) die Öffnung (20) des Rahmenelements (19) auf zumindest eine Teilöffnung (22) reduziert ist, wobei in der zumindest einen Teilöffnung (22) ein Einsatz (23) zur Aufnahme zumindest eines Kabels angeordnet ist.

## Beschreibung

Die vorliegende Erfindung betrifft eine Vorrichtung zum Durchführen von Kabeln durch eine Struktur einer Kabine, insbesondere einen Kabinenboden, einer landwirtschaftlichen Arbeitsmaschine gemäß dem Oberbegriff des unabhängigen Patentanspruchs 1, eine Kabine einer landwirtschaftlichen Arbeitsmaschine mit einer solchen Vorrichtung gemäß dem Oberbegriff des unabhängigen Patentanspruchs 14 sowie eine landwirtschaftliche Arbeitsmaschine mit einer solchen Kabine gemäß dem Oberbegriff des unabhängigen Patentanspruchs 15.

Es ist bekannt, dass es bei landwirtschaftlichen Arbeitsmaschinen, insbesondere bei als Traktoren ausgeführten landwirtschaftlichen Arbeitsmaschinen, üblich ist Anbaugeräte, beispielsweise einen Ladewagen, eine Ballenpresse, ein Mähwerk, eine Heuwerbungsmaschine, eine Spritze oder dergleichen, an die landwirtschaftliche Arbeitsmaschine anzuhängen, um gewisse Arbeitsaufträge auf dem Hof oder einer landwirtschaftlichen Fläche durchführen zu können. Neben der mechanischen Kopplung zwischen landwirtschaftlicher Arbeitsmaschine und Anbaugerät, beispielsweise über eine Deichsel, ist es ferner oftmals üblich elektrische, pneumatische und/oder hydraulische Verbraucher mit einem oder mehreren Versorgern zu verbinden. In diesem Zusammenhang müssen oftmals vom Anbaugerät ausgehende Kabel, Schläuche oder dergleichen, beispielsweise Kabel für die elektrische Versorgung, Kabel zur Datenübertragung und/oder Schläuche zur Fluidübertragung, innerhalb oder außerhalb der Kabine der landwirtschaftlichen Arbeitsmaschine mit der landwirtschaftlichen Arbeitsmaschine, beispielsweise einem Steuergerät oder einem Steuerblock, gekoppelt werden.

Für die Führung, insbesondere die abgedichtete Führung, von solchen Kabeln und/oder Schläuchen von außen in das Kabineninnere ist es bekannt Vorrichtungen zu nutzen, welche in oder an einer Kabinenstrebe montiert werden und die Kabel oder Schläuche aufnehmen. Eine solche Vorrichtung ist beispielsweise aus der aus der DE 39 42 780 C1 bekannt.

Die DE 39 42 780 C1 beschreibt beispielsweise einen Leitungsdurchgang für eine Kabinenheckwandung einer landwirtschaftlichen Arbeitsmaschine. Die Heckwandung weist eine zu einer Abschlusskante hin offene Ausnehmung auf, in die ein Steckteil einfügt wird, welches in seinem mittleren Bereich eine Durchtrittsöffnung für eine Leitung enthält. Mit anderen Worten, die offene Ausnehmung kann durch ein eingefügtes Steckteil mit Durchtrittsöffnung verschlossen werden, wobei weiterhin eine Leitung in das Kabineninnere geführt werden kann.

Die Führung von Kabeln, Schläuchen oder dergleichen ist allerdings nicht nur darauf beschränkt, dass Kabel und/oder Schläuche von einem Anbaugerät zur Arbeitsmaschine, insbesondere durch eine Struktur der Kabine ins Kabineninnere, geführt werden müssen. Vielmehr ist es weiterhin erforderlich Kabel und/oder Schläuche im Bereich der Arbeitsmaschine zu führen. Auch hierbei ergibt sich die Herausforderung, dass gewisse Kabel und/oder Schläuche von innerhalb der Kabine nach außerhalb der Kabine geführt werden müssen. Insbesondere bei der Lenkung einer Arbeitsmaschine ergibt sich diese Herausforderung, da eine Lenkpumpe und das Lenkrad in oder an einer im Kabineninneren angeordneten Lenksäule montiert sind, Lenkzylinder allerdings außerhalb der Kabine im Bereich der Fahrzeugachsen positioniert sind. Anders als bei der Führung von Kabeln und/oder Schläuchen von einem Anbaugerät in das Kabineninnere müssen im Bereich der Lenksäule nicht nur einige wenige Kabel und Schläuche durch die Struktur der Kabine, hier den Kabinenboden, geführt werden, sondern gleich eine Vielzahl an Kabeln und Schläuchen, die dann in unterschiedliche Teilbereiche der Arbeitsmaschine, insbesondere zu den Fahrzeugachsen, weitergeführt werden müssen. Damit die Vielzahl an Kabel und Schläuchen in das bzw. aus dem Kabineninneren geführt werden kann, ist eine relativ große Ausnehmung im Kabinenboden vorgesehen. Eine solch große Ausnehmung stellt gewisse Herausforderungen in Bezug auf den Eintritt von Geräuschen und/oder Verunreinigungen in das Kabineninnere dar.

Ausgehend hiervon ist es demnach die Aufgabe der vorliegenden Erfindung eine Vorrichtung zum Durchführen von Kabeln durch eine Struktur einer Kabine, insbesondere einen Kabinenboden, anzugeben, welche die arbeitsmaschinenseitige Führung einer Vielzahl an Kabeln in das bzw. aus dem Inneren der Kabine erlaubt, bei gleichzeitig guter Geräuschdämpfung und gutem Schutz vor Eintritt von Verunreinigungen in das Innere der Kabine.

Diese Aufgabe wird erfindungsgemäß durch die Merkmale des unabhängigen Patentanspruchs 1 gelöst, wobei vorteilhafte Weiterbildungen der erfindungsgemäßen Vorrichtung Gegenstand der entsprechenden abhängigen Patentansprüche 2 bis 13 sind.

Demnach betrifft die vorliegende Erfindung eine Vorrichtung zum Durchführen von Kabeln durch eine Ausnehmung in einer Struktur einer Kabine, insbesondere einem Kabinenboden, einer landwirtschaftlichen Arbeitsmaschine, insbesondere eines Traktors. Die Vorrichtung ist an der Struktur der Kabine im Bereich der Ausnehmung anordenbar. Die Vorrichtung ist dadurch gekennzeichnet, dass sie ein Rahmenelement mit einer Öffnung umfasst, das an der Struktur der Kabine lösbar befestigbar ist und zwar derart, dass die Öffnung des Rahmenelements mit der Ausnehmung in der Struktur der Kabine fluchtet, und ein Verschlusselement umfasst, welches lösbar an dem Rahmenelement befestigt ist. Mittels des Verschlusselements ist die Öffnung des Rahmenelements auf zumindest eine Teilöffnung reduziert, wobei in der zumindest einen Teilöffnung ein Einsatz zur Aufnahme zumindest eines Kabels angeordnet ist.

Zunächst sei erwähnt, dass unter dem Begriff "Kabel" im Rahmen der vorliegenden Erfindung gleichermaßen auch Schläuche, Leitungen, Rohre oder dergleichen zu verstehen sind, die dazu eingerichtet sind bzw. dienen, Daten, Signale, Fluide oder dergleichen zu führen bzw. zu übertragen.

Die erfindungsgemäße Vorrichtung ermöglicht die systematische und geordnete Führung einer Vielzahl an Kabeln aus dem bzw. in das Innere der Kabine durch eine in einer Struktur der Kabine gebildete Ausnehmung, wobei bestehende Anforderungen an die Dämpfung von Betriebs- und/oder Umgebungsgeräuschen sowie an den Eintritt von Verunreinigungen in das Innere der Kabine eingehalten werden können. Die Verwendung einer mehrteiligen Vorrichtung, erlaubt eine besonders unkomplizierte Montage der Vorrichtung an der Struktur der Kabine, sodass diese sowie die Kabel nach Fertigstellung der Kabine montiert bzw. verlegt werden können. Durch die Verwendung eines Einsatzes in den Teilöffnungen, der die Kabel zur Durchführung aus dem bzw. in das Kabineninnere aufnimmt, wird sichergestellt, dass keine großen Öffnungen bzw. Lücken verbleiben, durch die Geräusche und/oder Verunreinigungen in die Kabine eindringen können.

Gemäß einer vorteilhaften Weiterbildung der Erfindung ist vorgesehen, dass der Einsatz zumindest einen Durchbruch zur Aufnahme des zumindest einen Kabels umfasst.

Vorzugsweise ist vorgesehen, dass der zumindest eine Durchbruch zylindrisch ausgebildet ist.

Gemäß einer vorteilhaften Weiterbildung der Erfindung ist vorgesehen, dass der Einsatz zwei oder mehr Durchbrüche umfasst, wobei die Durchbrüche gleiche und/oder verschiedene Durchmesser aufweisen.

Vorzugsweise ist vorgesehen, dass die Durchbrüche vorgeformt und/oder ausgeformt sind.

Vorgeformt bedeutet in diesem Zusammenhang, dass der Durchbruch strukturell ausgebildet, jedoch noch durch eine dünne Membran verschlossen ist, sodass kein Kabel durch den Durchbruch geführt werden kann. Sind der oder die Durchbrüche hingegen ausgeformt, so ist der Durchbruch ohne Membran gefertigt worden, die Membran vor oder nach dem Zusammenbau bzw. der Montage der Vorrichtung entfernt oder durchstoßen worden, sodass ein Kabel durch den Durchbruch geführt werden kann. Der Einsatz kann bei zwei oder mehr Durchbrüchen so ausgestaltet sein, dass wahlweise alle Durchbrüche des Einsatzes vorgeformt sind, alle Durchbrüche ausgeformt sind oder ein Teil der Durchbrüche vorgeformt und ein Teil der Durchbrüche ausgeformt ist.

Mittels des oder der Durchbrüche im in den Teilöffnungen angeordneten Einsatz wird sichergestellt, dass gerade nur eine derart große Öffnung verbleibt wie für die Durchführung der Kabel notwendig. Ein Kabel ist bei der Durchführung derart in dem Durchbruch aufgenommen, dass die den Durchbruch definierende Wandung des Einsatzes an der Außenwandung des Kabels anliegt, wodurch ein Wirkflächenpaar zwischen Kabel und Einsatz ausgebildet wird, das sicherstellt, dass im Wesentlichen keine, wenn überhaupt nur eine geringe Menge an Geräuschen und/oder Verunreinigungen zwischen Kabel und Einsatz in die Kabine eindringen kann. Die Möglichkeit vorgeformte und/oder ausgeformte Durchbrüche im Einsatz vorzusehen, erlaubt eine vereinfachte und kostengünstige Herstellung der Einsätze und der Vorrichtung insgesamt, durch eine hohe Anzahl an Gleichteilen, die nachträglich, also vor oder während der Montage, im Hinblick auf die Anzahl und Dimensionierung von durchzuführenden Kabeln angepasst werden kann.

Gemäß einer vorteilhaften Weiterbildung der Erfindung ist vorgesehen, dass das Rahmenelement und das Verschlusselement starr und der Einsatz verformbar ausgebildet sind.

Vorzugsweise ist vorgesehen, dass der Einsatz aus einem gummielastischen EPDM-Werkstoff ausgebildet ist.

Die Ausgestaltung des Einsatzes als verformbares Element stellt sicher, dass eine dichtende Anlage zwischen Einsatz und Kabel beim Durchführen der Kabel ausgebildet wird. So kann der Durchmesser eines Durchbruchs aufgrund der verformbaren Ausgestaltung beispielsweise etwas kleiner gewählt werden als der Außendurchmesser eines Kabels, das durch den Durchbruch geführt werden soll, sodass der Einsatz dichtend an dem Kabel anliegt. Die starre Ausgestaltung des Rahmenelements und des Verschlusselements sorgt hingegen dafür, dass eine hinreichend stabile Befestigung der Vorrichtung an der Struktur der Kabine und der einzelnen Elemente aneinander möglich ist.

Gemäß einer vorteilhaften Weiterbildung der Erfindung ist vorgesehen, dass der Einsatz einteilig oder zweiteilig ausgebildet ist.

Gemäß einer vorteilhaften Weiterbildung der Erfindung ist vorgesehen, dass der Einsatz an das Rahmenelement und/oder das Verschlusselement der Vorrichtung angeformt ist.

Alternativ hierzu ist vorgesehen, dass der Einsatz in die Teilöffnung eingesetzt und mittels des Rahmenelements und/oder des Verschlusselements in der Teilöffnung fixiert ist.

Gemäß einer vorteilhaften Weiterbildung der Erfindung ist vorgesehen, dass die Teilöffnung und der Einsatz quaderförmig, zylindrisch oder prismatisch ausgebildet sind.

Die vielfältigen Ausgestaltungsmöglichkeiten des Einsatzes sorgen für ein erhebliches Maß an Flexibilität bei der Anbringung bzw. Befestigung der Vorrichtung an der Struktur der Kabine und der Durchführung der Kabel mittels der Vorrichtung. So kann die Ausgestaltung der Vorrichtung speziell im Hinblick auf die vorliegenden Randbedingungen, die durch die Ausgestaltung der Kabine bzw. der Ausnehmung in der Struktur der Kabine vorgegeben werden, angepasst sein, wodurch eine für den spezifischen Anwendungsfall optimale Lösung geschaffen wird.

Gemäß einer vorteilhaften Weiterbildung der Erfindung ist vorgesehen, dass mittels des Verschlusselements die Öffnung des Rahmenelements auf drei Teilöffnungen reduziert ist.

Gemäß einer vorteilhaften Weiterbildung der Erfindung ist vorgesehen, dass eine der drei Teilöffnungen und der entsprechende Einsatz für die Teilöffnung quaderförmig und die beiden anderen der drei Teilöffnungen und die entsprechenden Einsätze der Teilöffnungen zylindrisch ausgebildet sind.

Gemäß einer vorteilhaften Weiterbildung der Erfindung ist vorgesehen, dass die drei Teilöffnungen aneinander angrenzen.

Vorzugsweise ist vorgesehen, dass die drei Teilöffnungen entlang einer orthogonal zu jeder Mittelachse der Teilöffnungen verlaufenden Achse aneinander angrenzen.

Die Anordnung der Teilöffnungen angrenzend aneinander, vorzugsweise entlang einer orthogonal zu jeder Mittelachse verlaufenden Achse, sorgt dafür, dass die Kabel zwar geordnet, jedoch gebündelt aus der bzw. in die Kabine geführt werden können, somit die Ausnehmung in der Struktur der Kabine so gering wie möglich ausgelegt werden kann.

Gemäß einer vorteilhaften Weiterbildung der Erfindung ist vorgesehen, dass das Rahmenelement einen Anlagebereich zum Befestigen des Rahmenelements an der Struktur der Kabine umfasst.

Vorzugsweise ist vorgesehen, dass die Formgebung des Anlagebereichs im Wesentlichen der Formgebung der Struktur der Kabine entspricht.

Hierdurch wird eine stabile Befestigung bzw. Anordnung der Vorrichtung an der Strukturkabine der Kabine möglich, wobei die Kabinensilhouette beibehalten bzw. der durch die Kabine eingenommene Bauraum auf der Arbeitsmaschine nicht ausgeweitet wird. Durch die abgestimmte Formgebung des Anlagebereichs wird weiterhin die Dämpfungs- und/oder Dichtwirkung der Vorrichtung im Hinblick auf Geräusche und/oder Verunreinigungen erheblich begünstigt, da das Rahmenelement und die Struktur der Kabine in Wesentlichen flächig aneinander anliegen.

Gemäß einer vorteilhaften Weiterbildung der Erfindung ist vorgesehen, dass das Rahmenelement und das Verschlusselement jeweils eine Vielzahl an Befestigungsbereichen umfasst, mittels derer das Rahmenelement an der Struktur der Kabine lösbar befestigbar und das Verschlusselement lösbar am Rahmenelement befestigt ist.

Die Bereitstellung einer Vielzahl an Befestigungsbereichen sorgt für eine einfache Zugänglichkeit und somit einfache Montage der Vorrichtung an der Struktur der Kabine und gleichzeitig eine stabile und sichere Befestigung der Vorrichtung an der Struktur der Kabine, sodass ein unbeabsichtigtes Lösen der Vorrichtung von der Struktur der Kabine, beispielsweise aufgrund von Erschütterung und/oder Vibrationen während des Betriebs der Arbeitsmaschine, zuverlässig verhindert, zumindest weitgehend ausgeschlossen werden kann.

Gemäß einer vorteilhaften Weiterbildung der Erfindung ist vorgesehen, dass das Rahmenelement zwei auf einander gegenüberliegenden Seiten des Rahmenelements angeordnete Dichtungselemente umfasst, wobei die beiden Dichtungselemente derart angeordnet sind, dass das eine der beiden Dichtungselemente mit dem Verschlusselement in abdichtender Anlage ist und das andere der beiden Dichtungselemente beim Befestigen des Rahmenelements an der Struktur der Kabine mit der Struktur der Kabine in abdichtende Anlage gelangt.

Die Bereitstellung von Dichtungselementen am Rahmenelement der Vorrichtung begünstigt die Dämpfung- und/oder Dichtwirkung im Hinblick auf Geräusche und/oder Verunreinigungen weiter. Mittels der Dichtungselemente wird sichergestellt, dass Geräusche und/oder Verunreinigungen nicht oder nur in geringem Maße zwischen der Struktur der Kabine und dem Rahmenelement bzw. dem Rahmenelement und dem Verschlusselement in das Innere der Kabine eindringen können.

Die erfindungsgemäße Aufgabe wird ferner durch eine Kabine einer landwirtschaftlichen Arbeitsmaschine, insbesondere eines Traktors, gemäß dem unabhängigen Patentanspruch 14 gelöst.

Weiterhin wird die erfindungsgemäße Aufgabe durch eine landwirtschaftliche Arbeitsmaschine, insbesondere einen Traktor, gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine in Gestalt eines Traktors;
- FIG. 2: eine schematische und exemplarische Darstellung einer erfindungsgemäßen Vorrichtung zum Durchführen von Kabeln durch eine Struktur einer Kabine der Arbeitsmaschine aus FIG. 1;
- FIG. 3: eine schematische und exemplarische Darstellung eines Rahmenelements der Vorrichtung aus FIG. 2 in einem an der Struktur der Kabine befestigten Zustand;
- FIG. 4: eine schematische und exemplarische Darstellung der Vorder- und Rückseite des Rahmenelements der Vorrichtung aus FIG. 2; und
- FIG. 5: eine schematische und exemplarische Darstellung der Vorrichtung aus FIG. 2 mit durchgeführten Kabeln in einem an der Struktur der Kabine befestigten Zustand.

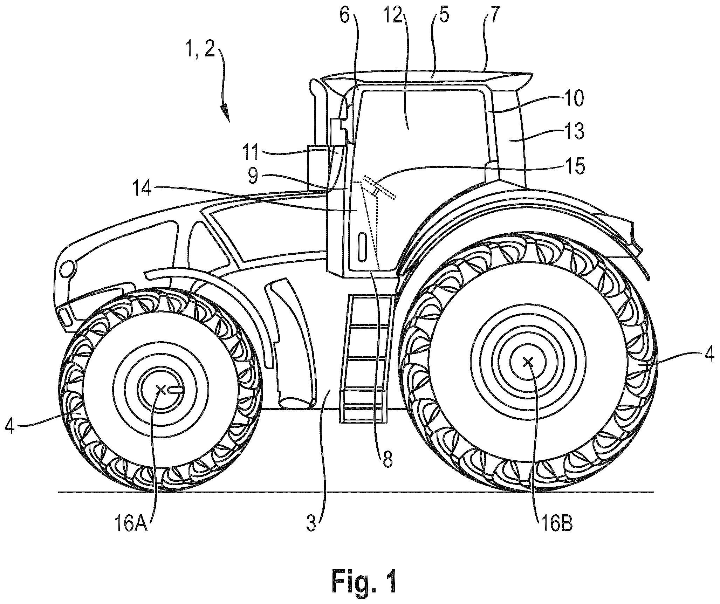

In FIG. 1 ist schematisch und exemplarisch eine landwirtschaftliche Arbeitsmaschine 1 abgebildet. Die Arbeitsmaschine 1 ist im dargestellten Ausführungsbeispiel als Traktor 2 ausgebildet, kann gleichermaßen aber auch als Mähdrescher, Feldhäcksler, Teleskoplader, Radlader oder dergleichen ausgebildet sein. Die hier als Traktor 2 ausgebildete Arbeitsmaschine 1 umfasst unter anderem ein Chassis 3, Bodeneingriffsmittel 4, eine auf dem Chassis 3 gelagerte Kabine 5 sowie - in FIG. 1 nicht dargestellte - Aggregate zum Antrieb der Arbeitsmaschine 1 und/oder eines - in FIG. 1 ebenfalls nicht dargestellten - mit der Arbeitsmaschine 1 koppelbaren Anbaugeräts.

Die Kabine 5 dient der Steuerung sowie allgemeinen Überwachung eines Betriebs der landwirtschaftlichen Arbeitsmaschine 1, in der sich ein - in den FIGs. nicht dargestellter-Bediener während des Betriebs des Traktors 2 zur Steuerung derselben befindet. Die Kabine 5 umfasst eine Rahmenstruktur 6, von der in FIG. 1 eine Dachstruktur 7 und eine als Kabinenboden bezeichnete Bodenstruktur 8, die einen oberen und unteren räumlichen Abschluss der Kabine 5 bilden, sowie Tragsäulen 9, 10, sogenannte A- und B-Säulen der Kabine 5, dargestellt sind. Die Rahmenstruktur 6 kann weitere Strukturelemente, beispielsweise eine sich zwischen den zwei die A-Säulen bildenden Tragsäulen 9 oder eine sich zwischen den zwei die B-Säulen bildenden Tragsäulen 10 erstreckende - in den FIGs. ebenfalls nicht dargestellte - Querstrebe umfassen. Zwischen den die A-Säulen bildenden Tragsäulen 9 erstreckt sich in Querrichtung des Traktors 2 eine Frontscheibe 11, die einen vorderen räumlichen Abschluss der Kabine 5 bildet. Neben der Frontscheibe 11 umfasst die Kabine 5 an ihren Seiten jeweils eine Seitenscheibe 12, welche Teil einer Zugangstür zur Kabine 5 sein kann. Die Seitenscheiben 12 erstrecken sich zwischen einer jeweiligen eine A-Säule bildenden Tragsäule 9 und einer jeweiligen eine B-Säule bildenden Tragsäule 10 und bilden einen seitlichen räumlichen Abschluss der Kabine 5.

Weiterhin umfasst die Kabine 5 eine Heckscheibe 13, die sich zwischen den die B-Säulen bildenden Tragsäulen 10, der Dachstruktur 7 und der sich zwischen den zwei die B-Säulen bildenden Tragsäulen 10 erstreckende Querstrebe erstreckt und die schwenkbar an der Rahmenstruktur 6, beispielsweise an der Dachstruktur 7 oder den die B-Säulen bildenden Tragsäulen 10, gelagert ist. Die Heckscheibe 13 bildet einen hinteren räumlichen Abschluss der Kabine 5. Außerdem umfasst die Kabine 5 eine Lenksäule 14, die ein Lenkrad 15 zur Steuerung des Traktors 2 durch den Bediener sowie eine - in den FIGs. nicht dargestellte - hydraulische Lenkpumpe zur lenkwinkelabhängigen Ansteuerung von - in den FIGs. ebenfalls nicht dargestellten - hydraulischen Lenkzylindern an der oder den lenkbaren Fahrzeugachsen 16A, 16B des Traktors 2.

Damit im Bereich der Lenksäule 14 angeordnete Kabel, also beispielsweise Schläuche zur Übertragung eines Hydraulikfluids von der Lenkpumpe zu den hydraulischen Lenkzylindern, und/oder Kabel zur Ansteuerung der Lenkpumpe, etwaiger für die Lenkung des Traktors 2 erforderlicher Sensorik, die in bzw. im Bereich der Lenksäule 14 angeordnet ist, oder dergleichen, aus dem Inneren der Kabine 5 zu den entsprechenden Komponenten, also beispielsweise zu den hydraulischen Lenkzylindern und/oder einer - in FIGs. nicht dargestellten - Steuerungsvorrichtung, geführt werden können, umfasst die Bodenstruktur 8, also der Kabinenboden, eine Ausnehmung 17.

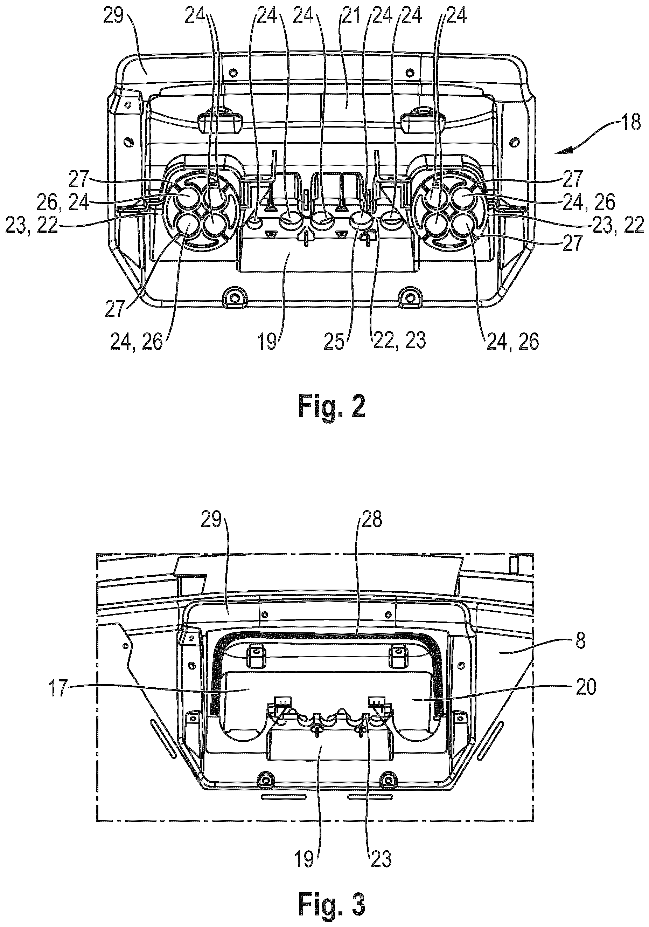

Eine solche Ausnehmung 17 in der Bodenstruktur 8 der Kabine 5 per se sorgt dafür, dass Geräusche ungedämpft und/oder Verunreinigungen ungehindert in das Kabineninnere gelangen können, was grundsätzlich, insbesondere aber im Betrieb des Traktors 2, unerwünscht ist. Um eine systematische und geordnete Führung der Kabel aus dem bzw. in das Innere der Kabine 5 zu ermöglichen und dabei gleichzeitig etwaige im Betrieb des Traktors 2 auftretende Geräusche und/oder Umgebungsgeräusche zu dämpfen und/oder Verunreinigungen an einem Eintritt in das Innere der Kabine 5 durch die Ausnehmung 17 zu hindern, ist eine Vorrichtung 18 zum Durchführen eines oder mehrerer Kabel durch die Ausnehmung 17 in einer Struktur, hier der Bodenstruktur 8, der Kabine 5 vorgesehen, die in den FIGs. 2 bis 5 im Detail dargestellt ist.

Die Vorrichtung 18 umfasst ein Rahmenelement 19 mit einer Öffnung 20. Die Vorrichtung 18 ist an der Bodenstruktur 8 der Kabine 5 im Bereich der Ausnehmung 17 anordenbar bzw. angeordnet und zwar mittels des Rahmenelements 19. Hierfür ist das Rahmenelement 19 der Vorrichtung 18 an der Bodenstruktur 8 der Kabine 5 lösbar befestigbar bzw. befestigt und zwar derart, dass die Öffnung 20 des Rahmenelement 19 mit der Ausnehmung 17 in der Bodenstruktur 8 der Kabine 5 fluchtet, wie insbesondere in FIG. 3 dargestellt. Neben dem Rahmenelement 19 umfasst die Vorrichtung 18 ein Verschlusselement 21. Das Verschlusselement 21 ist lösbar an dem Rahmenelement 19 befestigt. Im befestigten Zustand des Verschlusselements 21 an dem Rahmenelement 19 ist die Öffnung 20 des Rahmenelements 19 auf zumindest eine Teilöffnung 22, im dargestellten Ausführungsbeispiel auf drei Teilöffnungen 22, reduziert. Sofern mehrere Teilöffnungen 22 durch das Zusammenwirken von Rahmenelement 19 und Verschlusselement 21 ausgebildet werden, grenzen diese vorzugsweise aneinander an. Besonders bevorzugt ist vorgesehen, dass alle Teilöffnungen 22, wie insbesondere bei der dargestellten Ausführungsform der Vorrichtung 18 mit drei Teilöffnungen 22 zu sehen, entlang einer orthogonal zu jeder Mittelachse der Teilöffnung 22 verlaufenden Achse aneinander an. Abhängig von der Formgebung des Rahmenelements 19 und des Verschlusselements 21 kann die Teilöffnung 22, die durch ein Zusammenwirken beider Elemente 19, 21 entsteht, wahlweise quaderförmig, zylindrisch oder prismatisch ausgebildet sein. Im dargestellten Ausführungsbeispiel mit drei Teilöffnungen 22 sind beispielsweise zwei der drei Teilöffnungen 22 zylindrisch und eine der drei Teilöffnungen 22 quaderförmig ausgebildet.

Neben dem Rahmenelement 19 und dem Verschlusselement 21 umfasst die Vorrichtung 18 einen Einsatz 23 zur Aufnahme zumindest eines Kabels, der in der durch das Zusammenwirken von Rahmenelement 19 und Verschlusselement 21 gebildeten Teilöffnung 22 angeordnet ist. Im dargestellten Ausführungsbeispiel sind entsprechend der drei Teilöffnungen 22 auch drei solcher Einsätze 23 in den Teilöffnungen 22 angeordnet. Entsprechend zur Teilöffnung 22 kann der Einsatz 23 wahlweise quaderförmig, zylindrisch oder prismatisch ausgebildet sein. Im dargestellten Ausführungsbeispiel mit drei Teilöffnungen 22 und drei Einsätzen 23 sind beispielsweise zwei der drei Einsätze 23 zylindrisch und einer der drei Einsätze 23 quaderförmig ausgebildet. Selbstverständlich ist eine andere Anzahl an Teilöffnungen 22 und entsprechenden Einsätzen 23 gleichermaßen möglich, dabei sind entsprechend das Rahmenelement 19 und das Verschlusselement 21 der Vorrichtung derart ausgebildet, geformt bzw. ausgestaltet, dass durch ein Zusammenwirken beider Elemente 19, 21 die entsprechende Anzahl an Teilöffnungen 22 gebildet wird.

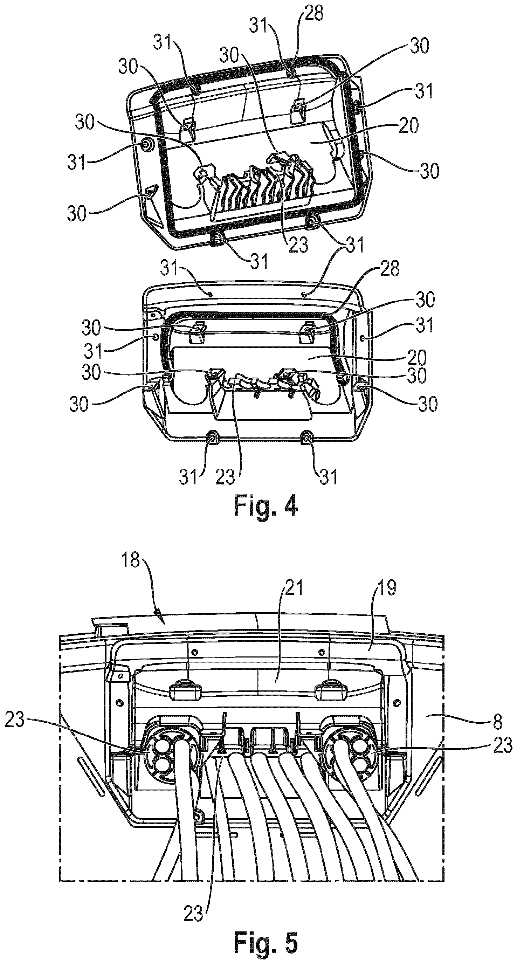

Der Einsatz 23 umfasst zumindest einen Durchbruch 24 zur Aufnahme des Kabels. Der Durchbruch 24 ist vorzugsweise zylindrisch ausgebildet, sodass dieser der Formgebung eines Kabels entspricht, wobei der Durchmesser des Durchbruchs 24 weiter vorzugsweise derart gewählt ist, dass die den Durchbruch 24 definierende Wandung 25 des Einsatzes 23 an einer Außenwandung eines Kabels anliegt, wie in FIG. 5 dargestellt. In dem dargestellten Ausführungsbeispiel umfassen die Einsätze 23 vier bzw. fünf solcher Durchbrüche 24. Demnach kann ein Einsatz 23 nicht nur einen Durchbruch 24 umfassten, sondern auch zwei oder mehr solcher Durchbrüche 24, wobei die Durchbrüche 24 wahlweise gleiche und/oder verschiedene Durchmesser aufweisen, sodass Kabel unterschiedlicher Dimensionierung aufgenommen werden können. FIG. 2 zeigt in diesem Zusammenhang beispielsweise einen Einsatz 23 der vier Durchbrüche 24 mit gleichem Durchmesser und einen Durchbruch 24 mit einem anderen Durchmesser umfasst. Die Durchbrüche 24 im Einsatz 23 können wahlweise vorgeformt und/oder ausgeformt sein. Vorgeformt bedeutet in diesem Zusammenhang, dass der Durchbruch 24 strukturell ausgebildet, jedoch noch durch eine dünne Membran 26 verschlossen ist, sodass kein Kabel durch den Durchbruch 24 geführt werden kann. Sind der oder die Durchbrüche 24 hingegen ausgeformt, so ist der Durchbruch 24 ohne Membran 26 gefertigt worden, die Membran 26 vor oder nach dem Zusammenbau bzw. der Montage der Vorrichtung 18 entfernt oder durchstoßen worden, sodass ein Kabel durch den Durchbruch 24 geführt werden kann. Der Einsatz 23 kann bei zwei oder mehr Durchbrüchen 24 so ausgestaltet sein, dass wahlweise alle Durchbrüche 24 des Einsatzes 23 vorgeformt sind, alle Durchbrüche 24 ausgeformt sind oder ein Teil der Durchbrüche 24 vorgeformt und ein Teil der Durchbrüche 24 ausgeformt ist. Die in den FIGs. 2 bis 5 dargestellte Ausführungsform der Vorrichtung 18 umfasst beispielsweise zwei zylindrische Einsätze 23 mit jeweils zwei vorgeformten Durchbrüchen 24 und zwei ausgeformten Durchbrüchen 24 und einen quaderförmigen Einsatz 23, bei dem alle Durchbrüche 24 ausgeformt sind. Ausgehend von einem Durchbruch 24 hin zum Randbereich des Einsatzes 23 kann ein Schlitz 27 vorgesehen sein, wodurch der Einsatz 23 auf ein oder mehrere Kabel aufgesteckt und somit vormontiert werden kann.

Der Einsatz 23 kann wahlweise einteilig oder zweiteilig ausgebildet sein. Weiterhin kann der Einsatz 23 an das Rahmenelement 19 und/oder an das Verschlusselement 21 der Vorrichtung 18 angeformt sein. Alternativ hierzu kann der Einsatz 23 in die Teilöffnung 22 eingesetzt und mittels des Rahmenelements 19 und/oder des Verschlusselements 21 in der Teilöffnung 22 fixiert sein. Hierfür kann der Einsatz 23 beispielsweise eine umlaufende Nut umfassen, über die der Einsatz 23 in die Teilöffnung 22 eingesetzt und von dem Rahmenelement 19 und/oder dem Verschlusselement 21 fixiert werden kann. Im dargestellten Ausführungsbeispiel der Vorrichtung 18 sind beispielsweise die zwei zylindrischen Einsätze 23 einteilig ausgebildet und in die entsprechenden Teilöffnungen 22 eingesetzt, wobei sie mittels des Rahmenelement 19 und des Verschlusselements 21 zwischen diesen beiden Elemente 19, 21 in der Teilöffnung 22 fixiert sind. Der quaderförmige Einsatz 23 ist hingegen zweiteilig ausgebildet, wobei ein Teil des Einsatzes 23 an dem Rahmenelement 19 und der andere Teil des Einsatzes 23 an dem Verschlusselement 21 angeformt ist. Die Durchbrüche 24 des zweigeteilten Einsatzes 23 sind dabei in jedem Teil des Einsatzes 23 im Wesentlichen hälftig ausgebildet, sodass sich im befestigten Zustand des Verschlusselement 21 an dem Rahmenelement 19 die Durchbrüche 24 in Gänze ausbilden.

Um einen Eintritt von Geräuschen und/oder Verunreinigungen zwischen Kabel und Einsatz 23 zumindest zu reduzieren, vorzugsweise in Gänze zu verhindern, ist der Einsatz 23 verformbar ausgebildet, vorzugsweise aus einem gummielastischen EPDM-Werkstoff. Hierdurch kann der Durchmesser eines Durchbruchs 24 beispielsweise etwas kleiner gewählt werden als der Außendurchmesser eines Kabels, das durch den Durchbruch 24 geführt werden soll, sodass der Einsatz 23 dichtend an dem Kabel anliegt. Das Rahmenelement 19 und das Verschlusselement 21 sind hingegen starr ausgebildet, sodass diese für eine hinreichend stabile Befestigung geeignet sind. Um einen Eintritt von Geräuschen und/oder Verunreinigung zwischen Rahmenelement 19 und Bodenstruktur 8 der Kabine 5 sowie zwischen Rahmenelement 19 und Verschlusselement 21 zumindest zu reduzieren, vorzugsweise in Gänze zu verhindern, umfasst das Rahmenelement 19 auf einander gegenüberliegenden Seiten des Rahmenelements 19 angeordnete Dichtungselemente 28. Die beiden Dichtungselemente 27 sind derart an bzw. auf dem Rahmenelement 19 angeordnet, dass das eine der beiden Dichtungselemente 28 mit dem Verschlusselement 21 in abdichtender Anlage ist und das andere der beiden Dichtungselemente 28 beim Befestigen des Rahmenelements 19 an der Bodenstruktur 8 der Kabine 5 mit der Bodenstruktur 8 der Kabine 5 in abdichtende Anlage gelangt.

Das Rahmenelement 19 umfasst weiterhin einen Anlagebereich 29 zum Befestigen des Rahmenelements 19 an der Bodenstruktur 8 der Kabine 5. Der Anlagebereich 29 weist eine Formgebung auf, die im Wesentlichen der Formgebung der Bodenstruktur 8 der Kabine 5 entspricht. Somit folgte der Anlagebereich 29 des Rahmenelement 19 der Kontur der Bodenstruktur 8, insbesondere im unmittelbaren Bereich um die Ausnehmung 17 herum, wie in FIG. 3 dargestellt.

Das Rahmenelement 19 und das Verschlusselement 21 der Vorrichtung 18 umfassen Befestigungsbereiche 30 zum lösbaren Befestigen, insbesondere Verschrauben, beider Elemente 19, 21 miteinander. Zum Befestigen, insbesondere Verschrauben, des Rahmenelements 19 an der Bodenstruktur 8 der Kabine 5 umfasst das Rahmenelement 19 zu dem eine Vielzahl weiterer Befestigungsbereiche 31.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Arbeitsmaschine | 16A, 16B | Fahrzeugachse |
| | | 17 | Ausnehmung |
| 2 | Traktor | 18 | Vorrichtung |
| 3 | Chassis | 19 | Rahmenelement |
| 4 | Bodeneingriffsmittel | 20 | Öffnung |
| 5 | Kabine | 21 | Verschlusselement |
| 6 | Rahmenstruktur | 22 | Teilöffnung |
| 7 | Dachstruktur | 23 | Einsatz |
| 8 | Bodenstruktur | 24 | Durchbruch |
| 9 | Tragsäule | 25 | Wandung |
| 10 | Tragsäule | 26 | Membran |
| 11 | Frontscheibe | 27 | Schlitz |
| 12 | Seitenscheibe | 28 | Dichtungselement |
| 13 | Heckscheibe | 29 | Anlagebereich |
| 14 | Lenksäule | 30 | Befestigungsbereich |
| 15 | Lenkrad | 31 | Befestigungsbereich |

## Patentansprüche

1. Vorrichtung (18) zum Durchführen von Kabeln durch eine Ausnehmung (17) in einer Struktur einer Kabine (5), insbesondere einem Kabinenboden, einer landwirtschaftlichen Arbeitsmaschine (1), insbesondere eines Traktors (2), wobei die Vorrichtung (18) an der Struktur der Kabine (5) im Bereich der Ausnehmung (17) anordenbar ist, **dadurch gekennzeichnet, dass** die Vorrichtung (18) ein Rahmenelement (19) mit einer Öffnung (20) umfasst, das an der Struktur der Kabine (5) lösbar befestigbar ist und zwar derart, dass die Öffnung (20) des Rahmenelements (19) mit der Ausnehmung (20) in der Struktur der Kabine (5) fluchtet, wobei die Vorrichtung (18) ein Verschlusselement (21) umfasst, welches lösbar an dem Rahmenelement (19) befestigt ist, wobei mittels des Verschlusselements (21) die Öffnung (20) des Rahmenelements (19) auf zumindest eine Teilöffnung (22) reduziert ist, wobei in der zumindest einen Teilöffnung (22) ein Einsatz (23) zur Aufnahme zumindest eines Kabels angeordnet ist.

2. Vorrichtung (18) nach Anspruch 1, **dadurch gekennzeichnet, dass** der Einsatz (23) zumindest einen Durchbruch (24) zur Aufnahme des zumindest einen Kabels umfasst, wobei der zumindest eine Durchbruch (24) vorzugsweise zylindrisch ausgebildet ist.

3. Vorrichtung (18) nach Anspruch 2, **dadurch gekennzeichnet, dass** der Einsatz (23) zwei oder mehr Durchbrüche (24) umfasst, wobei die Durchbrüche (24) gleiche und/oder verschiedene Durchmesser aufweisen, wobei vorzugsweise die Durchbrüche (24) vorgeformt und/oder ausgeformt sind.

4. Vorrichtung (18) nach einem der Ansprüche 1 bis 3, **dadurch gekennzeichnet, dass** das Rahmenelement (19) und das Verschlusselement (21) starr und der Einsatz (23) verformbar ausgebildet sind, wobei der Einsatz (23) vorzugsweise aus einem gummielastischen EPDM-Werkstoff ausgebildet ist.

5. Vorrichtung (18) nach einem der Ansprüche 1 bis 4, **dadurch gekennzeichnet, dass** der Einsatz (23) einteilig oder zweiteilig ausgebildet ist.

6. Vorrichtung (18) nach einem der Ansprüche 1 bis 5, **dadurch gekennzeichnet, dass** der Einsatz (23) an das Rahmenelement (19) und/oder das Verschlusselement (21) der Vorrichtung (18) angeformt ist; oder
der Einsatz (23) in die Teilöffnung (22) eingesetzt und mittels des Rahmenelements (19) und/oder des Verschlusselements (21) in der Teilöffnung (22) fixiert ist.

7. Vorrichtung (18) nach einem der Ansprüche 1 bis 6, **dadurch gekennzeichnet, dass** die Teilöffnung (22) und der Einsatz (23) quaderförmig, zylindrisch oder prismatisch ausgebildet sind.

8. Vorrichtung (18) nach einem der Ansprüche 1 bis 7, **dadurch gekennzeichnet, dass** mittels des Verschlusselements (21) die Öffnung (20) des Rahmenelements (19) auf drei Teilöffnungen (22) reduziert ist.

9. Vorrichtung (18) nach Anspruch 8, **dadurch gekennzeichnet, dass** eine der drei Teilöffnungen (22) und der entsprechende Einsatz (23) für die Teilöffnung (22) quaderförmig und die beiden anderen der drei Teilöffnungen (22) und die entsprechenden Einsätze (23) der Teilöffnungen (22) zylindrisch ausgebildet sind.

10. Vorrichtung (18) nach Anspruch 8 oder 9, **dadurch gekennzeichnet, dass** die drei Teilöffnungen (22) aneinander angrenzen, vorzugsweise entlang einer orthogonal zu jeder Mittelachse der Teilöffnungen (22) verlaufenden Achse aneinander angrenzen.

11. Vorrichtung (18) nach einem der Ansprüche 1 bis 10, **dadurch gekennzeichnet, dass** das Rahmenelement (19) einen Anlagebereich (29) zum Befestigen des Rahmenelements (19) an der Struktur der Kabine (5) umfasst, wobei vorzugsweise die Formgebung des Anlagebereichs (29) im Wesentlichen der Formgebung der Struktur der Kabine (5) entspricht.

12. Vorrichtung (18) nach einem der Ansprüche 1 bis 11, **dadurch gekennzeichnet, dass** das Rahmenelement (19) und das Verschlusselement (21) jeweils eine Vielzahl an Befestigungsbereichen (30, 31) umfasst, mittels derer das Rahmenelement (19) an der Struktur der Kabine (5) lösbar befestigbar und das Verschlusselement (21) lösbar an dem Rahmenelement (19) befestigt ist.

13. Vorrichtung (18) nach einem der Ansprüche 1 bis 12, **dadurch gekennzeichnet, dass** das Rahmenelement (19) zwei auf einander gegenüberliegenden Seiten des Rahmenelements (19) angeordnete Dichtungselemente (28) umfasst, wobei die beiden Dichtungselemente (28) derart angeordnet sind, dass das eine der beiden Dichtungselemente (28) mit dem Verschlusselement (21) in abdichtender Anlage ist und das andere der beiden Dichtungselemente (28) beim Befestigen des Rahmenelements (19) an der Struktur der Kabine (5) mit der Struktur der Kabine (5) in abdichtende Anlage gelangt.

14. Kabine einer landwirtschaftlichen Arbeitsmaschine (1), insbesondere eines Traktors (2), **dadurch gekennzeichnet, dass** die Kabine (5) eine Vorrichtung (18) zum Durchführen von Kabeln durch eine Ausnehmung (17) in einer Struktur der Kabine (5), insbesondere einem Kabinenboden, nach einem der Ansprüche 1 bis 13 umfasst.

15. Landwirtschaftliche Arbeitsmaschine (1), insbesondere Traktor (2), **dadurch gekennzeichnet, dass** die Arbeitsmaschine (1) eine Kabine (5) nach Anspruch 14 umfasst.
